# EUROPEAN PATENT SPECIFICATION

(11) **EP 1 247 703 B1**
(45) Date of publication and mention of the grant of the patent: **31.05.2006**
(21) Application number: 02006642.9
(22) Date of filing: 25.03.2002
(51) Int. Cl.: B60R 22/24, B60R 22/22

(54) **Seat belt system for vehicles and vehicle provided therewith**
Sicherheitsgurtsystem für Fahrzeuge und Fahrzeug mit einem solchen System
Système de ceinture de sécurité pour véhicule et véhicule avec un tel système

(30) Priority: 29.03.2001 JP 2001095620
(43) Date of publication of application: 09.10.2002
(73) Proprietor: Mazda Motor Corporation, Aki-gun, Hiroshima 735-8670 (JP)
(72) Inventor: Enomoto, Hiroaki, Sado-gun, Niigata 952-0434 (JP); Kishino, Kouji, Aki-gun, Hiroshima 735-8670 (JP); Mizuma, Takashi, Aki-gun, Hiroshima 735-8670 (JP)
(74) Representative: Müller-Boré & Partner Patentanwälte

(56) References cited:
- EP-A- 0 041 859
- DE-A- 3 539 051
- FR-A- 2 474 413
- FR-A- 2 646 641
- US-A- 3 819 196
- US-A- 4 007 802
- US-A- 4 909 539
- US-A- 5 044 459
- PATENT ABSTRACTS OF JAPAN vol. 004, no. 029 (M-002), 14 March 1980 (1980-03-14) & JP 55 004248 A (TAKATA KK), 12 January 1980 (1980-01-12)
- PATENT ABSTRACTS OF JAPAN vol. 013, no. 013 (M-783), 12 January 1989 (1989-01-12) & JP 63 222957 A (MAZDA MOTOR CORP), 16 September 1988 (1988-09-16)
- PATENT ABSTRACTS OF JAPAN vol. 2000, no. 22, 9 March 2001 (2001-03-09) & JP 2001 138864 A (TOYOTA AUTOM LOOM WORKS LTD), 22 May 2001 (2001-05-22)

## Description

The present invention relates to a seat belt system for a vehicle, more particularly, a seat belt system for a vehicle equipped with a double door structure, and to a vehicle provided with such seat belt system..

Conventionally, a double door structure is well known as disclosed in Japanese patent publication No. H8-142680. The conventional structure includes a lock pillar extending vertically in the middle portion of a rear opening which is opened and closed by a left-side door and a right-side door in a double door configuration. Such a double door structure may be adopted to an ingress and egress opening on the side of a vehicle. In such a double door structure as adopted to the ingress and egress opening as described above, a center-pillar would extend vertically in the middle portion of the ingress and egress opening, which is beneficial to the rigidity of the vehicle body, but is disadvantageous to the openness. To enhance the openness, a center-pillar-less structure, without the center-pillar, is preferable.

Meanwhile, Japanese patent publication No. S63-130450 discloses a seat belt system, which is so configured that a belt webbing of the seat belt system for the front-seat passenger is extended from the inside of the rear door to a front seat. The front door and the rear door combined with the seat belt system disclosed in the patent publication above are not of a double door structure, but the rear door is swingable about its frontal portion and the belt webbing locates in the vicinity of the pivotal axis of the rear door, causing no difficulties for the rear door to open. However, the seat belt system is disadvantageously adopted to the double door structure.

DE 35 39 051, FR 2 646 641 and EP 0 041 859 respectively disclose a seat belt system comprising a retractor fixed on a B-pillar of a vehicle body to retract a first end of a belt webbing and a sliding means fixed at an inner side of a side sill of a vehicle body to which a second end of the belt webbing is attached.

In view of the problem above, the object of the present invention is to provide a seat belt system for a vehicle and a vehicle provided therewith which achieve enhanced convenience of ingress and egress for the passengers.

This object is solved according to the invention by the use of a seat belt system according to claim 1, by a vehicle according to claim 6 and a vehicle door according to claim 14. Preferred embodiments of the invention are subject of the dependent claims.

Accordingly, an enhanced convenience of ingress and egress for the passengers is achieved, in particular with the improved appearance of the belt webbing of the seat belt system while the door being open, especially, which attains the openness of the door opening and improved accessibility for the legs of the passenger.

According to a preferred embodiment of the present invention, there is provided a seat belt system for a vehicle, for restraining the passenger in a seat disposed in a passenger compartment of the vehicle, the vehicle including an opening formed on at least one side of a vehicular body, and a first door moving between a first state where the first door closes at least a part of the opening and a second state where the first door opens the opening, the seat belt system comprising, a belt webbing, a retractor disposed in the first door, for retracting the proximal end of the belt webbing, a sliding means to which the distal end of the belt webbing is attached so that the distal end of the belt webbing is allowed to slide along the lower edge of the opening between a forward position and a rearward position.

Preferably, the sliding means comprising a guide member to be disposed on the lower edge of the opening so as to at least partly extend along the lower edge, and a slider to which the second end of said belt webbing is attached, the slider being mounted to said guide member so as to be slidable between the first position, preferably corresponding to a forward portion of the guide member, and the second position, preferably corresponding to a rearward portion of the guide member. Preferably, the distal end of the belt webbing may be located at the rearward position when the first door is in the second state, and located at the forward position when the first door is in the first state.

Further preferably, the guide member is to be mounted in an inclined orientation or arrangement on or with respect to the lower edge of the opening.

Accordingly, the distal or second end portion of the belt webbing slides rearwardly substantially along the lower edge of the opening with the opening of the door, which enhances convenience of ingress and egress for the passengers, in particular with the improved appearance of the belt webbing while the first door being open. Especially, it attains the openness of the opening and improved accessibility for the legs of the passenger to the seat.

According to the invention, there is further provided a vehicle including an opening formed on at least one side of a vehicular body, and a first door movable between a first state where the first door closes at least a part of the opening and a second state where the first door opens the opening, wherein the vehicle comprises a seat belt system according to the invention or an embodiment thereof.

According to a further preferred embodiment, the vehicle may include the first door swingably or pivotably supported on the vehicle body at its trailing edge via at least one hinge and a second door swingably or pivotably supported on the vehicle body at its trailing edge via at least one hinge which cooperatively close the opening, and the opening may be a single opening continuously formed.

Accordingly, the first door and the second door constitute a double door configuration without a center-pillar, which attains the larger door opening for efficient use and enhanced openness of the opening.

Preferably, the sliding means may comprise a guide member disposed along the lower edge of the opening, and a slider to which the distal end of the belt webbing, fitting onto the guide member slidably between a forward portion and a rearward portion of the guide member. More preferably, the vehicular body may include a kick-up or, stepped portion stepped upwardly on which the rear seat is to be disposed, and the rearward portion of the guide member may be disposed laterally adjacent to the rear seat on the kick-up portion.

Accordingly, the distal end of the belt webbing slides along the lower edge of the opening according to the movement of the first door with the aid of the guide member, which ensures the sliding of the distal end of the belt webbing. Additionally, the distal end of the belt webbing slides up to the vicinity of the rear seat, or slides to further rearward position when the first door is opened, which achieves improved convenience of ingress and egress for rear passengers.

These and other objects, features and advantages of the present invention will become more apparent upon reading of the following detailed description of preferred embodiments and accompanying drawings. It should be understood that even though embodiments are separately described, single features thereof may be combined to additional embodiments.

These and other objects, features, aspects, and advantages of the present invention will become more apparent from the following detailed description of the preferred embodiment relative to the accompanied drawings, in which:
FIG. 1 is a side view of the vehicle equipped with the seat belt system according to a preferred embodiment of the present invention.
FIG. 2 is an elevational view of the significant portion, when the door is in closed state.
FIG. 3 is an elevational view for assistance in explaining the movement of the belt webbing by the opening of the rear door.
FIG. 4 is an elevational view of the significant portion, when the rear door is open.
FIG. 5 is a perspective view showing the construction of the sliding device.
FIG. 6 is a cross-sectional view showing another embodiment of the sliding device.
FIG. 7 is a side view of the vehicle equipped with the seat belt system according to the preferred embodiment of the present invention.
FIG. 8 is an elevational view for assistance in explaining the movement of the belt webbing by the opening of the rear door.
FIG. 9 is an elevational view of the significant portion, when the rear door is open.
FIG. 10 is a perspective view showing the sliding device in a slanting manner.

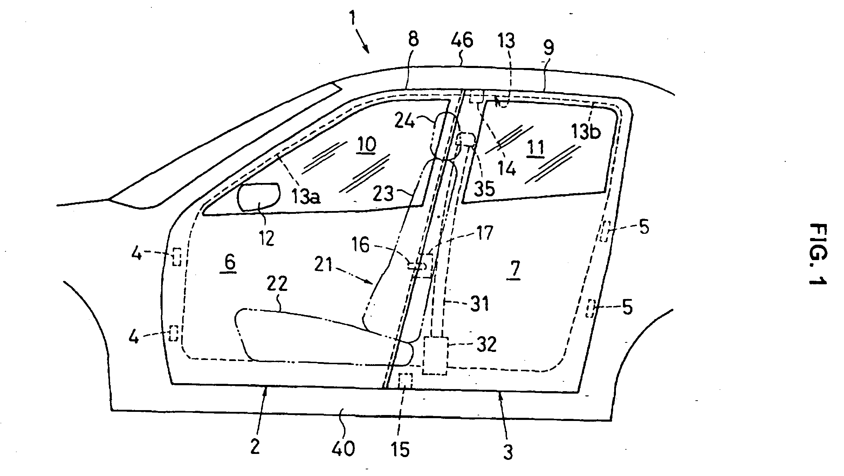

A preferred embodiment of the present invention will be described with reference to FIG. 1 to FIG. 5. Firstly, with reference to FIG. 1 to FIG. 4, a body structure and a door structure will be described.

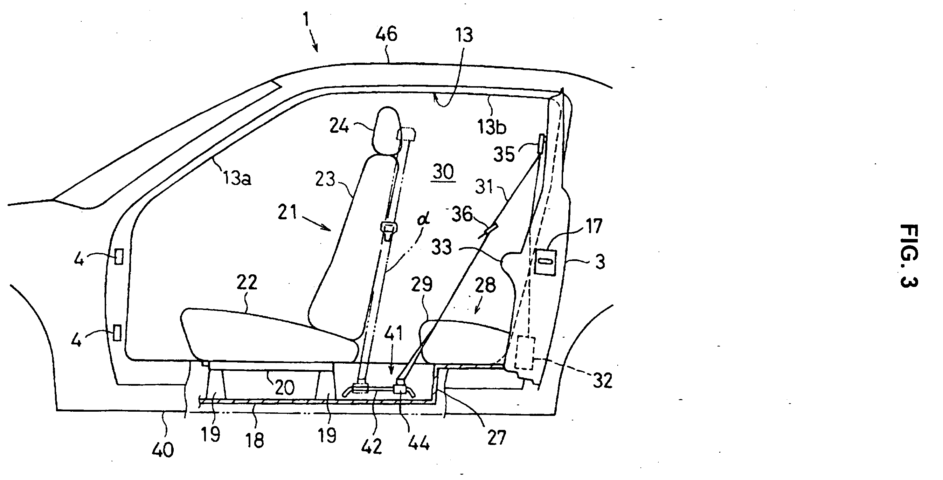

As shown in FIG. 1 and FIG. 3, side doors are disposed on the side portion of a body of a vehicle 1. The side doors comprise of a front door 2 and a rear door 3 which are supported on the side portion of a body of a vehicle 1 via front-door hinges 4 and rear-door hinges 5 attached on the a leading edge of the front door 2 and a trailing edge of the rear door 3, respectively, constituting a side door structure in a double door configuration. Accordingly, the front door 2 opens or pivots in a forward direction while the rear door 3 opens or pivots in a backward direction, i.e. in a direction substantially opposite to that of the front door 2.

The front door 2 and the rear door 3 comprise door panels 6, 7, door sashes 8, 9, and door windows 10, 11, respectively. Between the door panel 6 and door panel 7 (specifically, in the interspace defined by a door inner-panel and a door-outer panel), side impact bars extend substantially in the vehicular longitudinal direction, respectively.

On the front door 2, a side mirror 12 for rearward visibility and an outside door-handle (not shown) for unlatch operation for the front door 2 from the outside preferably are disposed.

In the double door configuration according to this embodiment, the rear door 3 is prohibited from opening unless the front door 2 opens.

Meanwhile, inboardly adjacent to the doors in the closed position, a front ingress and egress opening 13a for a front passenger and a rear ingress and egress opening 13b for a rear passenger as door openings (side openings of the vehicle) are continuously formed to provide a substantially continuous opening 13, whereby a center-pillar-less or B-post-less body structure is attained. The openings 13a and 13b are covered and uncovered, or closed and opened by the doors 2, 3, respectively.

As shown in FIG. 1, at the forward portions of the upper and lower edge of the rear door 3, locks 14, 15 are provided for locking the rear door 3 with the body, and at the middle portion of the leading edge of the rear door 3, a lock 17 is provided for locking a striker 16 on the front door 2.

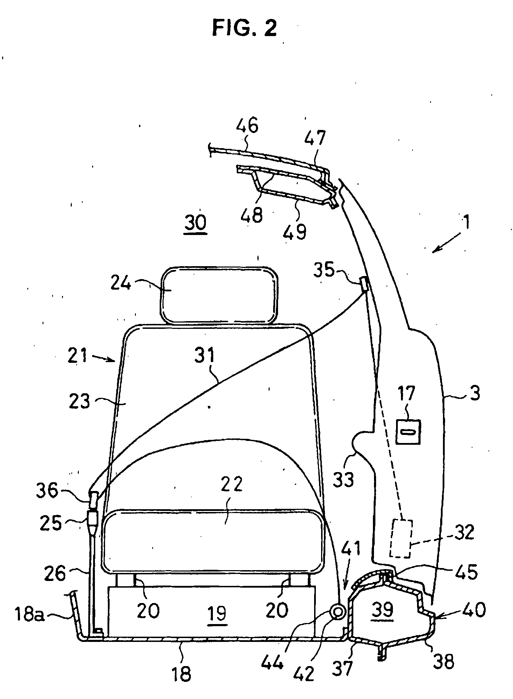

On the other hand, as shown in FIG. 2 and FIG. 3, a front seat 21 is mounted on a floor panel 18 via brackets 19, 19 and a seat-sliding system or mechanism 20. The front seat 21 comprises a seat cushion 22, a seat back 23, and a head rest 24. Between the seat cushion 22 of the front seat 21 and a center tunnel 18a, a buckle 25 is fixedly secured to the floor panel 18 via a bracket 26. Alternatively, the buckle 25 may be secured to the seat cushion via a stalk.

The rear portion of the floor panel 18 is stepped or projected upwardly to integrally or unitarily form a kick-up or stepped portion 27. On the top of the kick-up 27, a seat cushion 29 of a rear seat 28 is mounted. Thus, as shown in FIG. 3, in the passenger compartment 30 of the vehicle 1, a plural row of seats 21, 28 are arranged in the vehicular longitudinal direction.

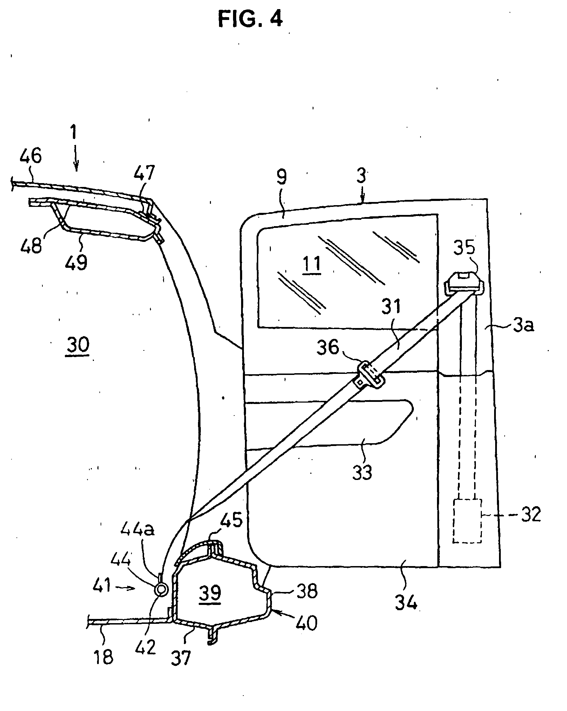

FIG. 2 is a partial elevational view showing said front seat 21 and the rear door 3 in the closed state, and FIG. 4 is a partial elevational view showing the rear door 3 in the open state and also depicting a belt-webbing or seat-belt or safety belt system 31 for restraining the passenger to be positioned in the front seat 21.

The belt webbing 31 is retracted by a retractor 32 disposed on a front structural door-member 3a of the rear door 3. The front structural door-member 3a has the equivalent rigidity to that of a center-pillar which would be provided.

The lower half of the inboard side of the rear door 3 is covered with a door trim 34 having an arm rest 33. On the other hand, at the upper portion of the inboard side of the front structural door-member 3a, a shoulder anchor 35 is attached so as to substantially face or correspond to the flank of head rest 24 of the front seat 21. The shoulder anchor 35 may be displaceably provided on the door member 3a substantially along a vertical direction.

The belt webbing 31 is so arranged as to extend from the retractor 32 through the upper edge of the door trim 34 along the inboard side of the front structural door-member 3a, and reaches the passenger compartment 30 through the shoulder anchor 35. In other words, the shoulder anchor 35 supports a portion of the extended length of the belt webbing 31.

On the extended length of the belt webbing 31, a tongue 36 is slidably provided which can cooperate with the buckle 25 to be locked or fixed thereto. The distal end, or the lower end of the belt webbing 31 is so connected to the lower edge of the door opening 13 as to be slidable in the vehicular longitudinal direction between a first position (corresponding to a front portion FP of a guide member 42 to be described later) and a second position (corresponding to a rear portion RP of the guide member 42 to be described later), as shown in FIG. 3. Subsequently, the sliding structure disposed on the lower end of the belt webbing 31 will be described.

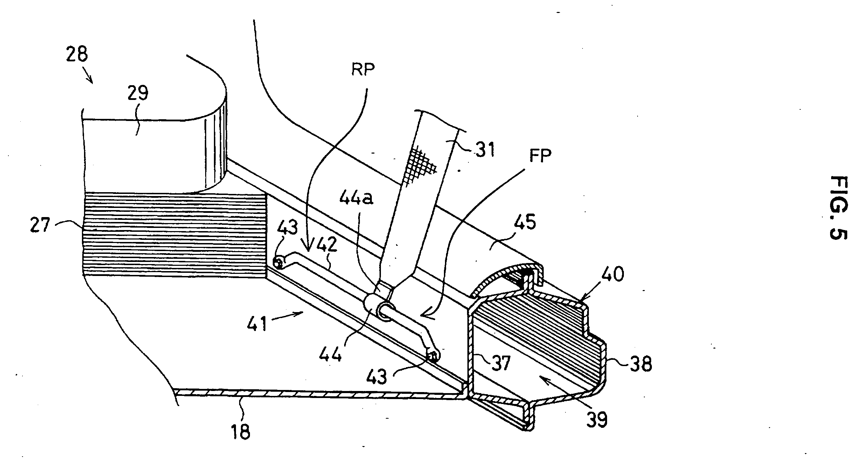

As shown in FIG. 5, along both lateral sides of the floor panel (the drawing shows one of them), a side sill or door sill or rocker panel 40, which is a structural member and includes a closed cross-section 39 defined by a side-sill inner 37 and side-sill outer 38, is disposed. A guide member 42 as an element of a sliding device 41 is fixedly secured to the side-sill inner 37 of the side sill 40 via fasteners, for example, via bolts 43. The guide member 42 preferably substantially has a bridge-like shape and comprises a slide portion for a slider 44 to be described later.

The sliding device 41 is arranged between the belt webbing 31 and the side-sill inner 37 as a lower edge of the door opening 13, and comprises the guide member 42 and a slider 44 slidable forwardly and rearwardly, or between a forward position and a rearward position on the guide member 42. The slider 44 is integrally formed with a belt-attaching portion 44a at which the lower end of the belt webbing 31 is fixedly attached. Thus, the lower end of the belt webbing 31 is guided or slidably fixed by the sliding device 41 so as to slide substantially forwardly and rearwardly along the inboard side of the side sill 37.

In this embodiment shown in FIG. 5, the guide member is formed from a metallic cylindrical pipe. The pipe has bent portions near its ends, and both ends are processed into flat attaching portions which are secured to the side-sill inner 37 via the bolts 43.

The slider 44 is formed from a metallic cylindrical pipe, and slides along the peripheral surface of the straight portion of the guide member 42. The pipe has a projection bonded thereto or integrally or unitarily provided thereon, which preferably acts as a belt attaching portion 44a.

As shown by phantom lines α, when the rear door 3 is in the closed state, the belt webbing 31, the shoulder anchor 35, and the tongue 36 are so arranged as to substantially face or substantially correspond to the flank of the seat back 23 of the front seat 21. When the front passenger pulls the belt webbing 31 to fasten the seat belt, the lower portion of the belt webbing 31 attached to the slider 44 is preferably caused to move towards the front seat 21 along the guide member 42 up to a forward position.

Then, the engagement of the clasp at the tip of the tongue 36 with the buckle 25 results in the three-point seat belt restraint configuration for restraining the passenger in the front seat 21.

On the other hand, when the rear door 3 is opened after the front passenger unlatches the seat belt 31 and opens the front door 2, the movement of the rear door 3 pulls the belt webbing 31 rearwardly. Accordingly, the lower portion of the belt webbing attached to the slider 44 moves to a rearward position along the guide member 42, causing no interference against the legs of the rear passenger in egress. This advantage is available in ingress likewise.

In the drawing, identified by 45, 46, 47, 48, and 49 are a scuffed plate e.g. made of resin, etc, a roof panel, a roof rail, a roof-rail outer, and roof-rail inner, respectively.

As described above, according to the embodiment shown in FIG. 1 to FIG. 5, there is provided the seat belt system for the vehicle 1, for restraining the passenger in the seat 21 disposed in the passenger compartment of the vehicle 1, the vehicle 1 including the door opening 13 formed on at least one side of the vehicular body, and a door 3 moving between a first state where the door 3 closes at least a part of the door opening 13 and a second state where the door 3 opens at least part of the door opening 13, the seat belt system comprising, the belt webbing 31, the retractor 32 disposed in or on or at the door 3, for retracting the proximal or first end of the belt webbing 31, the sliding device 41 to which the distal or second end of the belt webbing 31 is attached so that the distal end of the belt webbing 31 is allowed to slide or glide substantially along the lower edge of the door opening 13 between a forward or first position (corresponding to the front portion FP of the guide member 42) and a rearward or second position (corresponding to a rearward part of the guide member 42). Preferably, the distal or second end of the belt webbing 31 may be located at the rearward position when the door 3 is in the second state, and located at the forward position when the door 3 is in the first state.

Accordingly, the distal or second end portion of the belt webbing 31 slides rearwardly to the rearward position substantially along the lower edge of the door opening 13 with the opening of the door 3, which enhances convenience of ingress and egress for the passengers,further preferably achieving the improved appearance of the belt webbing 31 while the door 3 being open. Especially, it attains or improves the openness of the opening and improved accessibility for the legs of the passenger to the seat.

Additionally, the sliding device 41 preferably comprises a guide member 42 disposed on or mounted to the lower edge of the door opening 13 so as to extend along the lower edge, and the slider 44 to which the distal end of the belt webbing 31 is attached, fitting onto the guide member 42 slidably between the forward portion FP and the rearward portion RP of the guide member 42.

Accordingly, the distal end of the belt webbing 31 slides or glides substantially along the lower edge of the door opening 13 according to the movement of the door 3 with the aid of the guide member 42 and the slider 44, which ensures the sliding of the distal end of the belt webbing 31.

Further, the shoulder anchor 35 is disposed on the upper portion of the inboard surface of the door 3 and supports the middle portion of the belt webbing 31 between the distal or second end and the proximal or first end. Accordingly, the shoulder anchor 35 provides stable support for the belt webbing 31 and the three-point seat belt restraint configuration for restraining the passenger.

Moreover, the door 3 is swingably or pivotably supported on the vehicle body at its trailing or rearward edge via the hinge 5. Accordingly, the end portion of the belt webbing 31 slides rearwardly to the rearward position for the vehicle 1 by the swing or pivotal movement of the door 3 about the hinge 5 on its rear portion. Thus, the belt webbing 31 provides no interference against the legs of rear passenger in egress or in egress to enhance convenience of ingress and egress for the passengers.

Additionally, the vehicle comprises the front door 2 disposed ahead of the rear door 3 with being swinglably or pivotably supported on the vehicle body at its leading or front edge via the hinge 4, and the front door 2 and the rear door 3 cooperatively close the door opening 13. Accordingly, the rear door 3 and the front door 2 constitute a double door configuration, which attains the larger door opening 13 for efficient use.

Further, the door opening 13 is a single opening continuously formed. Accordingly, a center-pillar-less or B-post-less structure, without a center-pillar or B-post, is attained in combination with the double door configuration, so that the enough openness of the door opening and the efficient use of the continuous opening (the door opening 13) are available.

Moreover, the vehicle comprises the front seat 21 and the rear seat 28, and the seat belt system is permitted to restrain an occupant, or a passenger in the front seat 21 when the rear door 3 is in the first state, or closed. Accordingly, the passenger on the front seat 21 is reliably restrained by the belt webbing 31 to improve safety.

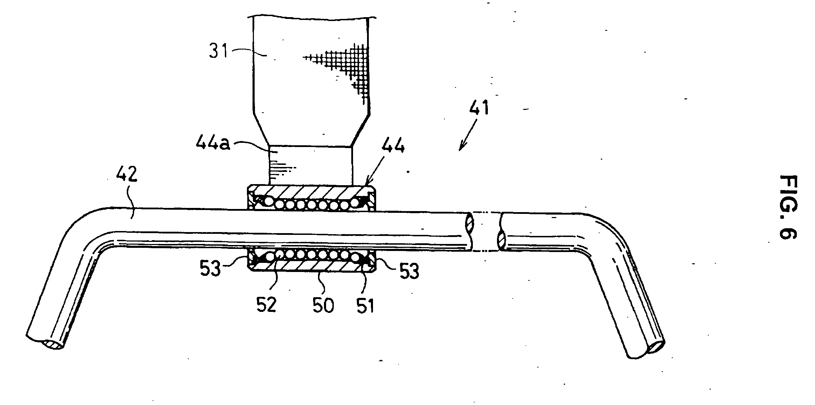

Alternatively, the sliding device 41 may be constituted as shown in FIG. 6. As shown in FIG. 6, the sliding device 41 comprises the guide member 42 formed from a cylindrical bar with a specified (predetermined or predeterminable) straight length, a ball-bush type slider 44 with an outer tube 50, a holder 51, a number of steel or bearing balls 52, and a stopper ring 53. On the outer tube 50, a belt attaching portion 44a is fixed or integrally or unitarily formed, to which the lower end of the belt webbing 31 is or can be attached.

According to the constitution above, friction of the slider 44 in sliding motion during the movement of the rear door 3 is reduced by a large amount, so that the lower end of the belt webbing 31 slides more reliably and smoothly. Where necessary, stoppers such as E-rings, stopper rings, and stopper pins may be attached on the forward end and rearward end of the guide member 42. Alternatively or additionally, the slider 44 may be provided at its contact portion with the guide member 42 with a coating and/or a layer of friction-reducing material such as teflon.

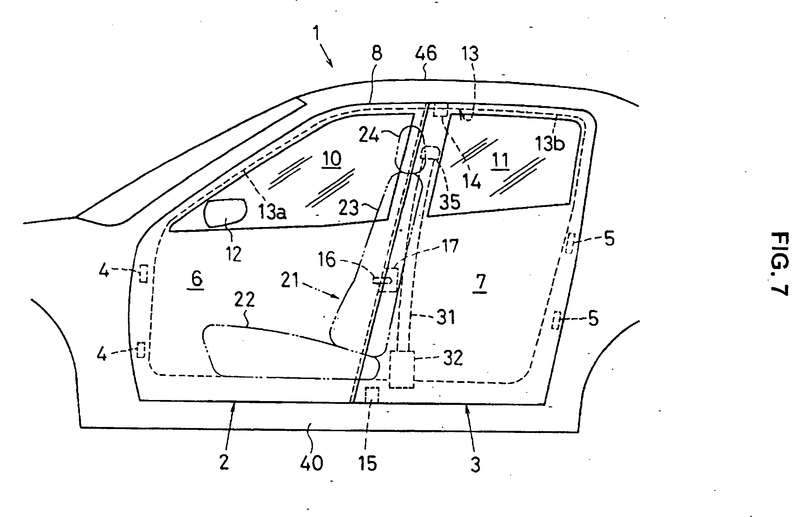

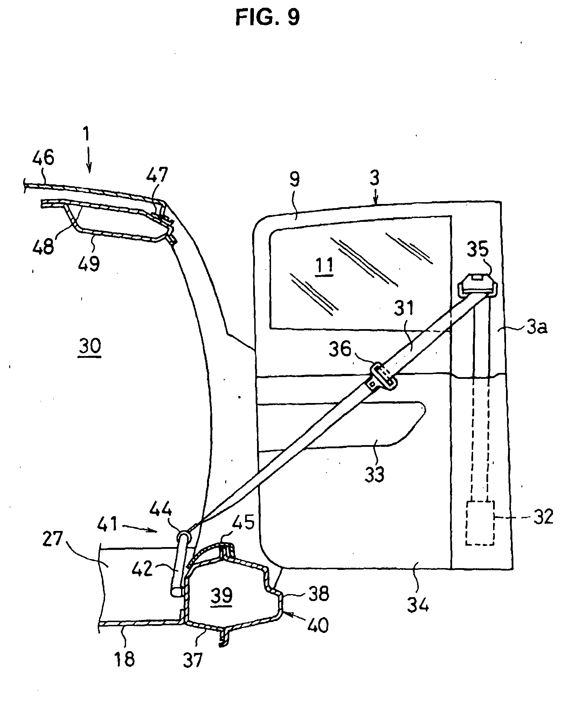

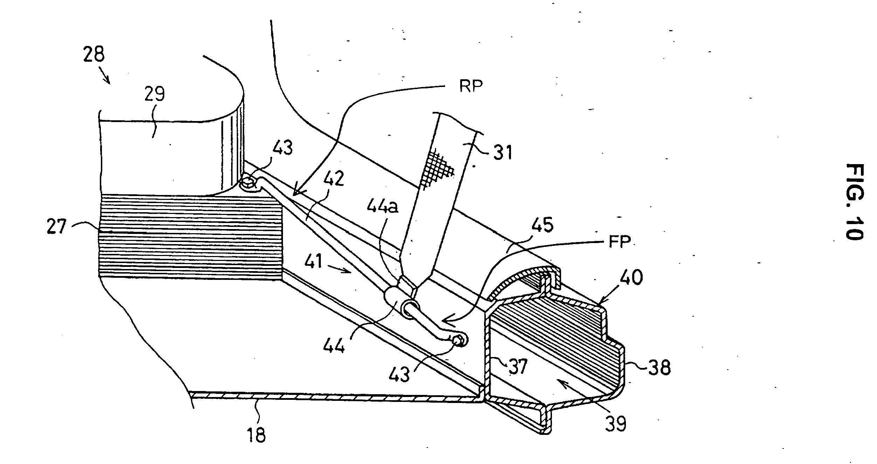

Subsequently, another preferred embodiment of the present invention will now be described with reference to FIG. 7 to FIG. 10. The description on the same or similar constitution, action and advantage as those of the preceding embodiment is omitted, and the elements identical or similar to the ones in the preceding drawings are given identical numerals.

In this embodiment shown in FIG. 7 to FIG. 10, the guide member 42 slops down to the forward, or is slantingly disposed so that a rear end of the guide member 42 is disposed in a position higher than a front end thereof; preferably the guide member 42 is arranged with an end located at the side-sill inner 37 and the other end located at a top deck surface of the kick-up or step or projection 27. The slider 44 slidably fits onto the substantially straight portion of the guide member 42.

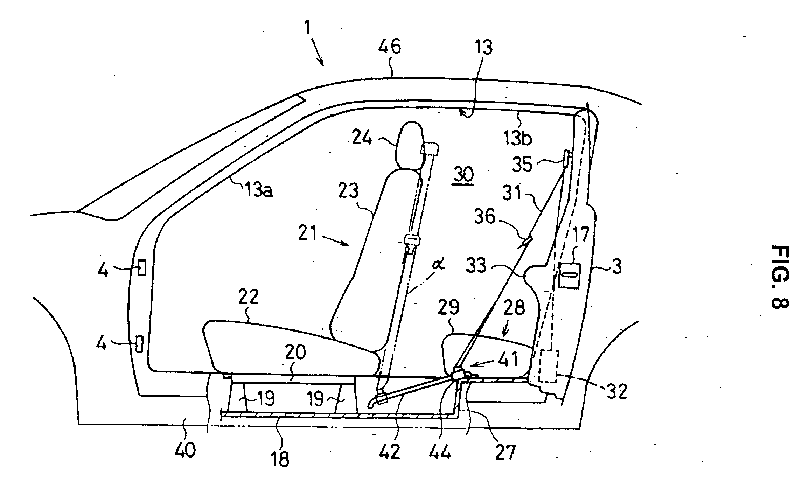

According to the construction, when the rear door 3 is in the closed state, the belt webbing 31 is shown as indicated by phantom lines α in FIG. 8. On the other hand, when the rear door 3 is opened after the front door 2 is opened, the slider 44 and the lower end of the belt webbing 31 is pulled rearwardly along the inclined or slantingly-disposed guide member 42 until the slider 44 reaches the top surface of the kick-up 27 laterally adjacent to the flank of the seat cushion 29 of the rear seat 28 as indicated by solid lines in FIG. 8. The rearward movement of the slider 44 is longer than that of the embodiment shown in FIG. 1 to FIG. 5, and causes no interference against the legs of the rear passenger in ingress and in egress.

As described above, in the seat belt system for the vehicle shown in FIG. 7 to FIG. 10, the sliding device 41 comprises the guide member 42 fixed to the body and the slider 44 which slides on the guide member 42, the vehicular body includes the kick-up 27 stepped upwardly on which the rear seat 28 is disposed, and the rearward portion of the guide member 42 is disposed laterally adjacent to the rear seat 28 on the kick-up 27 and fixed thereto. Particularly, the guide member 42 is slantingly disposed with an end located at the side-sill inner 37 and the other end located at the top surface of the kick-up 27. Accordingly, the lower end of the belt webbing 31 is guided by the slantingly-disposed guide member 42 and slider 44 to slide up to the vicinity of the rear seat 28, or slide to a further rearward position, so that largely-improved convenience for the rear passenger in ingress and egress is attained.

It should be appreciated that the constitution shown in FIG. 6 may adopted to the sliding device 41 shown in FIG. 7 to FIG. 10.

## Claims

1. A Use of a seat belt system for a vehicle (1), for restraining an occupant in a seat (21) disposed in a passenger compartment of the vehicle (1), the vehicle (1) including a first door (3) for opening and closing an opening (13) formed on at least one side of a vehicular body, a rear part of said first door (3) being supported on a hinge (5), and a second door (2) for opening and closing said opening (13) at the side of the vehicle body, a front part of said second door (2) being supported on a hinge (4), wherein the seat belt system comprises,
a belt webbing (31),
a retractor (32) to be mounted in said first door (3) of the vehicle (1) for retracting a first end of said belt webbing (31),
a sliding means (41) to be fixed on a lower edge (37) of the opening (13), to which a second end of said belt webbing (31) is attached so that the second end of said belt webbing (31) is allowed to slide along a lower edge (37) of the opening (13) at least between a first position (FP) and a second position (RP).

2. A Use of a seat belt system for a vehicle (1) as defined in claim 1, said sliding means (41) comprising:
a guide member (42) to be disposed on the lower edge (37) of the opening (13) so as to at least partly extend along the lower edge (37), and
a slider (44) to which the second end of said belt webbing (31) is attached, the slider (44) being mounted to said guide member (42) so as to be slidable between the first
position (FP) of the guide member (42), and the second position (RP) of the guide member (42).

3. A Use of a seat belt system for a vehicle (1) as defined in claim 2, wherein the vehicle (1) includes a first door (3) movable between a first state where the first door (3) closes at least a part of the opening (13) and a second state where the first door (3) opens the opening (13), and wherein said slider (44) is to be located at the second position (RP) of the guide member (42), when the first door (3) is in the second state and is to be located at the first position (FP) of the guide member (42), when the first door (3) is in the first state.

4. A Use of a seat belt system for a vehicle (1) according to claim 2 or 3, wherein the guide member (42) is to be mounted in an inclined orientation on the lower edge (37) of the opening.

5. A Use of a seat belt system for a vehicle (1) as defined in one or more of the preceding claims, further comprising a shoulder anchor (35) to be disposed on an upper portion of an inboard surface of the first door (3), wherein the shoulder anchor (35) supports a middle portion of said belt webbing (31) between the second end and the first end thereof.

6. A vehicle (1) including an opening (13) formed on at least one side of a vehicular body and a rear door (3) movable between a first state where the rear door (3) closes at least a part of the opening (13) and a second state where the rear door (3) opens the opening (13), and a front door (2) wherein said rear door (3) being attached to a vehicle body via rear-door-hinges (5) attached on a trailing edge of the rear door (3) and said front door (2) being attached to a vehicle body via front-door-hinges (4) attached on a leading edge of the front door (2) wherein the vehicle (1) comprises a seat belt system, the seat belt system comprising a belt webbing (31),
a retractor (32) to be mounted in said rear door (3) of the vehicle (1) for retracting a first end of said belt webbing (31),
a sliding means (41) to be fixed on a lower edge (37) of the opening (13), to which a second end of said belt webbing (31) is attached so that the second end of said belt webbing (31) is allowed to slide along a lower edge (37) of the opening (13) at least between a first position (FP) and a second position (RP).

7. A vehicle (1) as defined in claim 6, said sliding means (41) comprising:
a guide member (42) to be disposed on the lower edge (37) of the opening (13) so as to at least partly extend along the lower edge (37), and
a slider (44) to which the second end of said belt webbing (31) is attached, the slider (44) being mounted to said guide member (42) so as to be slidable between the first position (FP) of the guide member (42), and the second position (RP) of the guide member (42).

8. A vehicle (1) as defined in claim 7, wherein the vehicle (1) includes a first door (3) movable between a first state where the first door (3) closes at least a part of the opening (13) and a second state where the first door (3) opens the opening (13), and wherein said slider (44) is to be located at the second position (RP) of the guide member (42), when the first door (3) is in the second state and is to be located at the first position (FP) of the guide member (42), when the first door (3) is in the first state.

9. A a vehicle (1) according to claim 6 or 7, wherein the guide member (42) is to be mounted in an inclined orientation on the lower edge (37) of the opening.

10. A vehicle (1) as defined in one or more of claims 6 - 9, further comprising a shoulder anchor (35) to be disposed on an upper portion of an inboard surface of the first door (3), wherein the shoulder anchor (35) supports a middle portion of said belt webbing (31) between the second end and the first end thereof.

11. A vehicle (1) as defined in claim 6, wherein the opening (13) is a single continuously opening.

12. A vehicle (1) as defined in one of the preceding claims 6 to 11, comprising a front seat (21) and a rear seat (28), wherein said seat belt system is provided to restrain an occupant in the front seat (21) when the first door (3) is in the first state.

13. A vehicle (1) as defined in one of the preceding claims 6 to 12, wherein the vehicular body includes a kick-up portion (27) stepped upwardly on which the rear seat (28) is to be disposed, and wherein the rearward portion (RP) of the guide member (42) is located laterally adjacent to the rear seat (28) on or at the kick-up portion (27).

14. A vehicle door (3) for opening and closing at least a part of an opening (13) formed on at least one side of a vehicular body comprising a seat belt system a rear part of said door (3) being supported on a hinge (5), (4), wherein the seat belt system comprises, a belt webbing (31),
a retractor (32) mounted in said door (3) for retracting a first end of said belt webbing (31),
a sliding (41) to be fixed on a lower edge (37) of the opening (13), which said door is to close to which a second end of said belt webbing (31) is attached so that the second end of said belt webbing (31) is allowed to slide along a lower edge (37) of the opening (13) at least between a first position (FP) and a second position (RP).

15. A vehicle door as defined in claim 14, said sliding means (41) comprising:
a guide member (42) to be disposed on the lower edge (37) of the opening (13) so as to at least partly extend along the lower edge (37), and
a slider (44) to which the second end of said belt webbing (31) is attached, the slider (44) being mounted to said guide member (42) so as to be slidable between the first position (FP), of the guide member (42), and the second position (RP), of the guide member (42).

16. A vehicle door as defined in claim 15, wherein the door (3) is movable between a first state where the first door (3) closes at least a part of the opening (13) and a second state where the door (3) opens the opening (13), and wherein said slider (44) is to be located at the second position (RP) of the guide member (42), when the first door (3) is in the second state and is to be located at the first position (FP) of the guide member (42), when the first door (3) is in the first state.

17. A vehicle door according to claims 14 or 15, wherein the guide member (42) is to be mounted in an inclined orientation on the lower edge (37) of the opening.

18. A vehicle door as defined in one or more of the preceding claims, further comprising a shoulder anchor (35) to be disposed on an upper portion of an inboard surface of the door (3), wherein the shoulder anchor (35) supports a middle portion of said belt webbing (31) between the second end and the first end thereof.

## Patentansprüche

1. Verwendung eines Sicherheitsgurtsystems für ein Fahrzeug (1) zum Zurückhalten eines Insassen in einem Sitz (21), welcher in einem Fahrgastabteil des Fahrzeugs (1) angeordnet ist, wobei das Fahrzeug (1) eine erste Tür (3) zum Öffnen und Schließen einer Öffnung (13), welche an wenigstens einer Seite eines Fahrzeugkörpers bzw. einer Fahrzeugkarosserie ausgebildet ist, wobei ein rückwärtiges Teil der ersten Tür (3) an einem Gelenk (5) angelenkt bzw. abgestützt ist, und eine zweite Tür (2) zum Öffnen und Schließen der Öffnung (13) an der Seite des Fahrzeugkörpers beinhaltet, wobei ein vorderes Teil der zweiten Tür (2) an einem Gelenk (4) abgestützt ist, wobei das Sicherheitsgurtsystem umfaßt,
ein Gurtband (31),
eine Rückholeinrichtung (32), welche in der ersten Tür (3) des Fahrzeugs (1) zum Zurückholen eines ersten Endes des Gurtbands (31) zu montieren ist,
Gleit- bzw. Schiebemittel (41), welche an einem unteren Rand (37) der Öffnung (13) festzulegen sind, an welchen ein zweites Ende des Gurtbands (31) festgelegt ist, so daß dem zweiten Ende des Gurtbands (31) erlaubt ist, entlang eines unteren Rands bzw. Kante (37) der Öffnung (13) wenigstens zwischen einer ersten Position (FP) und einer zweiten Position (RP) zu gleiten.

2. Verwendung eines Sicherheitsgurtsystems für ein Fahrzeug (1) nach Anspruch 1, wobei die Gleitmittel (41) umfassen:
ein Führungsglied (42), welches an dem unteren Rand bzw. Kante (37) der Öffnung (13) anzuordnen ist, um sich wenigstens teilweise entlang des unteren Rands (37) zu erstrecken, und
einen Schieber bzw. Gleiter (44), an welchem das zweite Ende des Gurtbands (31) festgelegt ist, wobei der Gleiter (44) an dem Führungsglied (42) montiert ist, um zwischen der ersten Position (FP) des Führungsglieds (42) und der zweiten Position (RP) des Führungsglieds (42) verschiebbar bzw. verlagerbar bzw. gleitbar zu sein.

3. Verwendung eines Sicherheitsgurtsystems für ein Fahrzeug (1) nach Anspruch 2, wobei das Fahrzeug (1) eine erste Tür (3) beinhaltet, welche zwischen einem ersten Zustand, wo die erste Tür (3) wenigstens ein Teil der Öffnung (13) schließt, und einem zweiten Zustand bewegbar ist, wo die erste Tür (3) die Öffnung (13) öffnet, und wobei der Gleiter (44) an der zweiten Position (RP) des Führungsglieds (42) anzuordnen ist, wenn sich die erste Tür (3) in dem zweiten Zustand befindet, und an der ersten Position (FP) des Führungsglieds (42) anzuordnen ist, wenn sich die Tür (3) in dem ersten Zustand befindet.

4. Verwendung eines Sicherheitsgurtsystems für ein Fahrzeug (1) nach Anspruch 2 oder 3, wobei das Führungsglied (42) in einer geneigten Orientierung an dem unteren Rand bzw. Kante (37) der Öffnung zu montieren ist.

5. Verwendung eines Sicherheitsgurtsystems für ein Fahrzeug (1) nach einem oder mehreren der vorangehenden Ansprüche, weiters umfassend einen Schulteranker (35), welcher an einem oberen Abschnitt einer innenliegenden Fläche bzw. Oberfläche der ersten Tür (3) anzuordnen ist, wobei der Schulteranker (35) einen mittleren Abschnitt des Gurtbands (31) zwischen dem zweiten Ende und dem ersten Ende davon abstützt.

6. Fahrzeug (1), beinhaltend eine Öffnung (13), welche an wenigstens einer Seite eines Fahrzeugkörpers bzw. einer Fahrzeugkarosserie ausgebildet ist, eine rückwärtige Tür (3), welche zwischen einem ersten Zustand, wo die rückwärtige Tür (3) wenigstens ein Teil der Öffnung (13) verschließt, und einem zweiten Zustand bewegbar ist, wo die rückwärtige Tür (3) die Öffnung (13) öffnet, und eine vordere Tür (2), wobei die rückwärtige Tür (3) an einem Fahrzeugkörper über Gelenke (5) der rückwärtigen Tür festgelegt ist, welche an einem hinteren bzw. nachlaufenden Rand bzw. Kante der rückwärtigen Tür (3) festgelegt sind, und die vordere Tür (2) an einem Fahrzeugkörper über Gelenke (4) der vorderen Tür festgelegt ist, welche an einem vorderen Rand bzw. Kante der vorderen Tür (2) festgelegt sind, wobei das Fahrzeug (1) ein Sicherheitsgurtsystem umfaßt, wobei das Sicherheitsgurtsystem umfaßt
ein Gurtband (31),
eine Rückholeinrichtung (32), welche in der rückwärtigen Tür (3) des Fahrzeugs (1) zum Zurückholen eines ersten Endes des Gurtbands (31) zu montieren ist,
Gleit- bzw. Schiebemittel (41), welche an einem unteren Rand bzw. Kante (37) der Öffnung (13) festzulegen sind, an welchem ein zweites Ende des Gurtbands (31) festgelegt ist, so daß dem zweiten Ende des Gurtbands (31) erlaubt ist, entlang eines unteren Rands bzw. Kante (37) der Öffnung (13) wenigstens zwischen einer ersten Position (FP) und einer zweiten Position (RP) zu gleiten bzw. verschiebbar zu sein.

7. Fahrzeug (1) nach Anspruch 6, wobei die Gleitmittel (41) umfassen:
ein Führungsglied (42), welches an dem unteren Rand (37) der Öffnung (13) anzuordnen ist, um sich wenigstens teilweise entlang des unteren Rands (37) zu erstrecken, und
einen Schieber bzw. Gleiter (44), an welchem das zweite Ende des Gurtbands (31) festgelegt ist, wobei der Gleiter (44) an dem Führungsglied (42) montiert ist, um zwischen der ersten Position (FP) des Führungsglieds (42) und der zweiten Position (RP) des Führungsglieds (42) verschiebbar zu sein bzw. verlagerbar bzw. gleitbar zu sein.

8. Fahrzeug (1) nach Anspruch 7, wobei das Fahrzeug (1) eine erste Tür (3) beinhaltet, welche zwischen einem ersten Zustand, wo die erste Tür (3) wenigstens ein Teil der Öffnung (13) schließt, und einem zweiten Zustand bewegbar ist, wo die erste Tür (3) die Öffnung (13) öffnet, und wobei der Schieber (44) an der zweiten Position (RP) des Führungsglieds (42) anzuordnen ist, wenn sich die erste Tür (3) in dem zweiten Zustand befindet, und an der ersten Position (FP) des Führungsglieds (42) anzuordnen ist, wenn sich die Tür (3) in dem ersten Zustand befindet.

9. Fahrzeug (1) nach Anspruch 6 oder 7, wobei das Führungsglied (42) in einer geneigten Orientierung an dem unteren Rand bzw. Kante (37) der Öffnung zu montieren ist.

10. Fahrzeug (1) nach einem der Ansprüche 6 - 9, weiters umfassend einen Schulteranker (35), welcher an einem oberen Abschnitt einer innenliegenden Fläche bzw. Oberfläche der ersten Tür (3) anzuordnen ist, wobei der Schulteranker (35) einen mittleren Abschnitt des Gurtbands (31) zwischen dem zweiten Ende und dem ersten Ende davon abstützt.

11. Fahrzeug (1) nach Anspruch 6, wobei
die Öffnung (13) ein einzige durchgehende bzw. kontinuierliche Öffnung ist.

12. Fahrzeug (1) nach einem der vorangehenden Ansprüche 6 bis 11, umfassend einen vorderen Sitz (21) und einen rückwärtigen Sitz (28), wobei das Sicherheitsgurtsystem zum Zurückhalten eines Insassen in dem vorderen Sitz (21) vorgesehen ist, wenn sich die erste Tür (3) in dem ersten Zustand befindet.

13. Fahrzeug (1) nach einem der vorangehenden Ansprüche 6 bis 12, wobei der Fahrzeugkörper einen Anstiegsabschnitt (27) beinhaltet, welcher nach oben abgestuft ist, auf welchem der rückwärtige Sitz (28) anzuordnen ist, und wobei der rückwärtige Abschnitt (RP) des Führungsglieds (42) seitlich benachbart dem rückwärtigen Sitz (28) an oder bei dem Anstiegsabschnitt (27) angeordnet ist.

14. Fahrzeugtür (3) zum Öffnen und Schließen wenigstens eines Teils einer Öffnung (13), welche an wenigstens einer Seite eines Fahrzeugkörpers bzw. einer Fahrzeugkarosserie ausgebildet ist, umfassend ein Sicherheitsgurtsystem (4), wobei ein rückwärtiges Teil der Tür (3) an einem Gelenk (5) abgestützt ist, wobei das Sicherheitsgurtsystem umfaßt,
ein Gurtband (31),
eine Rückholeinrichtung (32), welche in der Tür (3) zum Zurückholen eines ersten Endes des Gurtbands (31) montiert ist,
Gleit- bzw. Schiebemittel (41), welche an einem unteren Rand bzw. Kante (37) der Öffnung (13) festzulegen sind, welche die Türe schließen soll, an welchen ein zweites Ende des Gurtbands (31) festgelegt ist, so daß dem zweiten Ende des Gurtbands (31) erlaubt ist, entlang eines unteren Rands bzw. Kante (37) der Öffnung (13) wenigstens zwischen einer ersten Position (FP) und einer zweiten Position (RP) zu gleiten.

15. Fahrzeugtür nach Anspruch 14, wobei die Gleitmittel (41) umfassen:
ein Führungsglied (42), welches an dem unteren Rand (37) der Öffnung (13) anzuordnen ist, um sich wenigstens teilweise entlang des unteren Rands (37) zu erstrecken, und
einen Schieber bzw. Gleiter (44), an welchem das zweite Ende des Gurtbands (31) festgelegt ist, wobei der Gleiter (44) an dem Führungsglied (42) montiert ist, um zwischen der ersten Position (FP) des Führungsglieds (42) und der zweiten Position (RP) des Führungsglieds (42) verschiebbar zu sein.

16. Fahrzeugtür nach Anspruch 15, wobei die Tür (3) zwischen einem ersten Zustand, wo die erste Tür (3) wenigstens ein Teil der Öffnung (13) schließt und einem zweiten Zustand bewegbar ist, wo die Tür (3) die Öffnung (13) öffnet, und wobei der Gleiter (44) an der zweiten Position (RP) des Führungsglieds (42) anzuordnen ist, wenn sich die erste Tür (3) in dem zweiten Zustand befindet, und an der ersten Position (FP) des Führungsglieds (42) anzuordnen ist, wenn sich die erste Tür (3) in dem ersten Zustand befindet.

17. Fahrzeugtür nach Anspruch 14 oder 15, wobei das Führungsglied (42) in einer geneigten Orientierung an dem unteren Rand bzw. Kante (37) der Öffnung zu montieren ist.

18. Fahrzeugtür nach einem oder mehreren der vorangehenden Ansprüche 14 - 17, weiters umfassend einen Schulteranker (35), welcher an einem oberen Abschnitt einer innenliegenden Fläche bzw. Oberfläche der Tür (3) anzuordnen ist, wobei der Schulteranker (35) einen mittleren Abschnitt des Gurtbands (31) zwischen dem zweiten Ende und dem ersten Ende davon abstützt.

## Revendications

1. Utilisation d'un système de ceinture de sécurité pour un véhicule (1) pour retenir l'occupant d'un siège (21) disposé dans l'habitacle du véhicule (1), le véhicule (1) comprenant une première porte (3) qui ouvre ou ferme une ouverture (13) formée sur au moins un côté du corps du véhicule, la partie arrière de ladite première porte (3) étant soutenue une charnière (5) et une deuxième porte (2) qui ouvre ou ferme ladite ouverture (13) formée sur le côté du corps du véhicule, la partie avant de ladite deuxième porte (2) étant soutenue par une charnière (4), le système de ceinture de sécurité comprenant :
une ceinture (31) en tissu,
un enrouleur (32) destiné à être monté dans ladite première porte (3) du véhicule (1) pour enrouler ladite ceinture (31) en tissu par sa première extrémité,
un moyen coulissant (41) destiné à être fixé sur le bord inférieur (37) de l'ouverture (13) et auquel la deuxième extrémité de ladite ceinture (31) en tissu est reliée de manière à permettre à la deuxième extrémité de ladite ceinture (31) en tissu de glisser le long du bord inférieur (37) de l'ouverture (13) au moins entre une première position (FP) et une deuxième position (RP).

2. Utilisation d'un système de ceinture de sécurité pour un véhicule (1) selon la revendication 1, dans laquelle ledit moyen coulissant (41) comprend :
un élément de guidage (42) destiné à être disposé sur le bord inférieur (37) de l'ouverture (13) de manière à s'étendre au moins en partie le long du bord inférieur (37) et
un coulisseau (44) auquel la deuxième extrémité de ladite ceinture (31) en tissu est attachée, le coulisseau (44) étant monté sur ledit élément de guidage (42) de manière à pouvoir coulisser entre la première position (FP) de l'élément de guidage (42) et la deuxième position (RP) de l'élément de guidage (42).

3. Utilisation d'un système de ceinture de sécurité pour un véhicule (1) selon la revendication 2, dans laquelle le véhicule (1) comprend une première porte (3) qui peut être déplacée entre une première position dans laquelle la première porte (3) ferme au moins une partie de l'ouverture (13) et une deuxième position dans laquelle la première porte (3) ouvre l'ouverture (13) et dans laquelle ledit coulisseau (44) doit être situé dans la deuxième position (RP) de l'élément de guidage (42) lorsque la première porte (3) est dans la deuxième position et doit être situé dans la première position (FP) lorsque la première porte (3) est dans la première position.

4. Utilisation d'un système de ceinture de sécurité pour un véhicule (1) selon les revendications 2 ou 3, dans laquelle l'élément de guidage (42) doit être monté en position inclinée sur le bord inférieur (37) de l'ouverture.

5. Utilisation d'un système de ceinture de sécurité pour un véhicule (1) selon l'une ou plusieurs des revendications précédentes, qui comprend en outre un ancrage d'épaule (35) destiné à être disposé sur la partie supérieure de la surface intérieure de la première porte (3), l'ancrage d'épaule (35) soutenant la partie centrale de ladite ceinture (31) en tissu entre sa première et sa deuxième extrémité.

6. Véhicule (1) qui comprend une ouverture (13) formée sur au moins un côté du corps du véhicule, une porte arrière (3) qui peut être déplacée entre une première position dans laquelle la porte arrière (3) ferme au moins une partie de l'ouverture (13) et une deuxième position dans laquelle la porte arrière (3) ouvre l'ouverture (13), ainsi qu'une porte avant (2), ladite porte arrière (3) étant fixée au corps du véhicule par des charnières (5) de porte arrière fixées sur le bord arrière de la porte arrière (3) et ladite porte avant (2) étant fixée au corps du véhicule par des charnières (4) de porte avant fixées sur le bord avant de la porte avant (2), le véhicule (1) comprenant un système de ceinture de sécurité.

7. Véhicule (1) selon la revendication 6, dans lequel ledit moyen coulissant (41) comprend :
un élément de guidage (42) destiné à être disposé sur le bord inférieur (37) de l'ouverture (13) de manière à s'étendre au moins en partie le long du bord inférieur (37) et
un coulisseau (44) auquel la deuxième extrémité de ladite ceinture (31) en tissu est attachée, le coulisseau (44) étant monté sur ledit élément de guidage (42) de manière à pouvoir coulisser entre la première position (FP) de l'élément de guidage (42) et la une deuxième position (RP) de l'élément de guidage (42).

8. Véhicule (1) selon la revendication 7, qui comprend une première porte (3) qui peut être déplacée entre une première position dans laquelle la première porte (3) ferme au moins une partie de l'ouverture (13) et une deuxième position dans laquelle la première porte (3) ouvre l'ouverture (13) et dans laquelle ledit coulisseau (44) doit être situé dans la deuxième position (RP) de l'élément de guidage (42) lorsque la première porte (3) est dans la deuxième position et doit être situé dans la première position (FP) de l'élément de guidage (42) lorsque la première porte (3) est dans la première position.

9. Véhicule (1) selon les revendications 6 ou 7, dans lequel l'élément de guidage (42) doit être monté en position inclinée sur le bord inférieur (37) de l'ouverture.

10. Véhicule (1) selon l'une ou plusieurs des revendications 6 à 9, qui comprend en outre un ancrage d'épaule (35) destiné à être disposé sur la partie supérieure de la surface intérieure de la première porte (3), l'ancrage d'épaule (35) soutenant la partie centrale de ladite ceinture (31) en tissu entre sa première et sa deuxième extrémité.

11. Véhicule (1) selon la revendication 6, dans lequel l'ouverture (13) est une unique ouverture continue.

12. Véhicule (1) selon l'une ou plusieurs des revendications 6 à 11 qui précèdent, qui comprend un siège avant (21) et un siège arrière (28), ledit système de ceinture de sécurité étant prévu pour retenir l'occupant du siège avant (21) lorsque la première porte (3) est dans la première position.

13. Véhicule (1) selon l'une ou plusieurs des revendications 6 à 12 qui précèdent, dans lequel le corps du véhicule comprend une partie (27) rabattue en gradin vers le haut et sur laquelle le siège arrière (28) est destiné à être placé, et dans lequel la position arrière (RP) de l'élément de guidage (42) est située en position latéralement adjacente au siège arrière (28), sur la partie (27) rabattue vers le haut ou près de celle-ci.

14. Porte (3) de véhicule, qui ouvre ou ferme au moins en partie une ouverture (13) formée sur au moins un côté du corps d'un véhicule qui comprend un système de ceinture de sécurité, la partie arrière de ladite porte (3) étant soutenue par une charnière (5), le système de ceinture de sécurité comprenant :
une ceinture (31) en tissu,
un enrouleur (32) monté dans ladite porte (3) pour enrouler ladite ceinture (31) en tissu par sa première extrémité,
un moyen coulissant (41) destiné à être fixé sur le bord inférieur (37) de l'ouverture (13) que ladite porte doit fermer et auquel la deuxième extrémité de ladite ceinture (31) en tissu est reliée de manière à permettre à la deuxième extrémité de ladite ceinture (31) en tissu de glisser le long du bord inférieur (37) de l'ouverture (13) au moins entre une première position (FP) et une deuxième position (RP).

15. Porte de véhicule selon la revendication 14, dans laquelle ledit moyen coulissant (41) comprend :
un élément de guidage (42) destiné à être disposé sur le bord inférieur (37) de l'ouverture (13) de manière à s'étendre au moins en partie le long du bord inférieur (37) et
un coulisseau (44) auquel la deuxième extrémité de ladite ceinture (31) en tissu est attachée, le coulisseau (44) étant monté sur ledit élément de guidage (42) de manière à pouvoir coulisser entre la première position (FP) de l'élément de guidage (42) et la deuxième position (RP) de l'élément de guidage (42).

16. Porte de véhicule selon la revendication 15, dans laquelle la porte (3) peut être déplacée entre une première position dans laquelle la première porte (3) ferme au moins une partie de l'ouverture (13) et une deuxième position dans laquelle la porte (3) ouvre l'ouverture (13) et dans laquelle ledit coulisseau (44) doit être situé dans la deuxième position (RP) de l'élément de guidage (42) lorsque la première porte (3) est dans la deuxième position et doit être situé dans la première position (FP) de l'élément de guidage (42) lorsque la première porte (3) est dans la première position.

17. Porte de véhicule selon les revendications 14 ou 15, dans laquelle l'élément de guidage (42) doit être monté en position inclinée sur le bord inférieur (37) de l'ouverture.

18. Porte de véhicule selon une ou plusieurs des revendications 14 à 17, qui comprend en outre un ancrage d'épaule (35) destiné à être disposé sur la partie supérieure de la surface intérieure de la porte (3), l'ancrage d'épaule (35) soutenant la partie centrale de ladite ceinture (31) en tissu entre sa première et sa deuxième extrémité.
